# EUROPÄISCHE PATENTANMELDUNG

(11) **EP 4 789 528 A1**
(43) Veröffentlichungstag der Anmeldung: **12.08.2026**
(21) Anmeldenummer: 25156061.1
(22) Anmeldetag: 05.02.2025
(51) Int. Cl.: A01D 41/12, A01F 12/40

(54) **WURFGEBLÄSEZUSAMMENBAU FÜR EINE ERNTEGUTRESTEHÄCKSEL UND VERTEILANORDNUNG EINES MÄHDRESCHERS UND ZUGEHÖRIGES WURFPADDEL**

(71) Anmelder: Deere & Company, Moline, IL 61265 (US)
(72) Erfinder: PATIL, Swarupanand, 68163 Mannheim (DE); NARLAWAR, Tushar, 68163 Mannheim (DE); SCHUBERT, Dirk, 68163 Mannheim (DE); DAHLHAUSER, Oliver, 68163 Mannheim (DE); JADHAV, Darshan, 68163 Mannheim (DE)
(74) Vertreter: Holst, Sönke

(57) **Zusammenfassung**

Ein Wurfgebläsezusammenbau für eine Erntegutrestehäcksel - und -verteilanordnung eines Mähdreschers (10) mit einem um eine Drehachse (88) drehbaren Rotor, um dessen Umfang eine Anzahl an Wurfpaddeln (84) verteilt ist, zeichnet sich dadurch aus, dass die Wurfpaddel (84) aus duktilem Gusseisen bestehen

## Beschreibung

Die Erfindung betrifft einen Wurfgebläsezusammenbau für eine Erntegutrestehäcksel - und -verteilanordnung eines Mähdreschers mit einem um eine Drehachse drehbaren Rotor, um dessen Umfang eine Anzahl an Wurfpaddeln verteilt ist und ein zugehöriges Wurfpaddel.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herumgeleitet und in nicht gehäckselter Form in einem Schwad auf dem Feld abgelegt, um es später mit einer Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Da Mähdrescher in den letzten Dekaden mit immer größeren Durchsatzleistungen ausgestattet wurden, die größere Schneidwerksbreiten und somit auch größere Verteilbreiten erfordern, die allein durch die Strohhäcksler nicht erreicht werden können, verwendet man stromab des Strohhäckslers so genannte Wurfgebläse, welche die Erntegutreste beschleunigen und auswerfen. Die Wurfgebläse sind üblicherweise paarweise nebeneinander angeordnet und umfassen in einem Gehäuse angeordnete Rotoren, die mittels eines Antriebs in Drehung versetzt werden.

Die Rotoren sind im Stand der Technik mit Paddeln versehen, um die Erntegutreste zu beschleunigen. Hierbei kann es sich um in sich flache oder in sich tordierte oder anderweitig gebogene Paddel handeln, wie z.B. in DE 199 08 111 C1, DE 101 33 965 A1, DE 10 2010 002 467 A1, EP 3 537 866 A1 und US 2007 / 0 015 556 A1 gezeigt, oder die Paddel sind an ihren äußeren Enden mit spitz zulaufenden oder zylindrischen, fingerartigen Elementen ausgestattet (EP 2347 645 A1, EP 3 228 174 A1, EP 4 115 723 A1).

Die flächigen Paddel bestehen im Stand der Technik aus spritzgegossenem Kunststoff oder aus Metall; insbesondere finden aus Stahlguss hergestellte Mitnehmer Verwendung (EP 4 115 723 A1). Zylindrische, als Fingerrechen geformte Paddel werden im Stand der Technik aus Federstahl oder aus geschmiedetem Stahl hergestellt.

### Aufgabe der Erfindung

Es hat sich in der Praxis herausgestellt, dass die aus Federstahl hergestellten Paddel eine unzureichende Lebensdauer aufweisen, während geschmiedeter Stahl höhere Herstellungskosten erfordert.

Die der Erfindung zu Grunde liegende Aufgabe wird darin gesehen, die geschilderten Nachteile zu vermeiden oder zumindest zu vermindern.

### Lösung

Diese Aufgabe wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Das Wurfpaddel ist aus duktilem Gusseisen hergestellt. Hierbei handelt es sich um ein Material, das sich durch geringe Herstellungskosten, geringes Gewicht, niedrige Abnutzung und hohe Stabilität auszeichnet und sich besonders gut für die Verwendung als Wurfpaddel eignet. Duktiles Gusseisen lässt sich leicht gießen und besser maschinell bearbeiten (schleifen) und ist preiswerter als Stahl. Zudem hat es eine bessere Widerstandsfähigkeit gegen Abrasion und eine höhere Streckgrenze als Gussstahl, der zudem komplexe und teure Bearbeitungswerkzeuge erfordert. Die Stückkosten für das Wurfpaddel aus duktilem Gusseisen sind geringer als jene für ein gleichartiges Wurfpaddel aus Gussstahl.

Die Wurfpaddel können als einteiliger Fingerrechen ausgeführt sein, der einen proximalen Befestigungsabschnitt umfasst, der mit einer Halterung des Rotors lösbar verbindbar oder verbunden ist, und von dem aus sich eine Anzahl an Fingern bis zu einem distalen Ende des Wurfpaddels erstrecken. Die Finger liegen vorzugsweise in einer gemeinsamen Ebene und bilden einen Fingerrechen. Die Finger können mit dem Befestigungsabschnitt in einer gemeinsamen Ebene liegen und die Finger einen rechteckigen Querschnitt aufweisen, dessen Erstreckung in der gemeinsamen Ebene größer ist als in der zur gemeinsamen Ebene senkrechten Richtung. Die Finger können sich vom Befestigungsabschnitt ausgehend zum distalen Ende hin in der zur gemeinsamen Ebene senkrechten Richtung kontinuierlich verjüngen und eine in der gemeinsamen Ebene gemessene, über die Länge der Finger konstante Breite aufweisen.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine perspektivische Ansicht der Wurfgebläse von hinten und unten, und
- Fig. 3: eine perspektivische Ansicht eines Wurfpaddels.

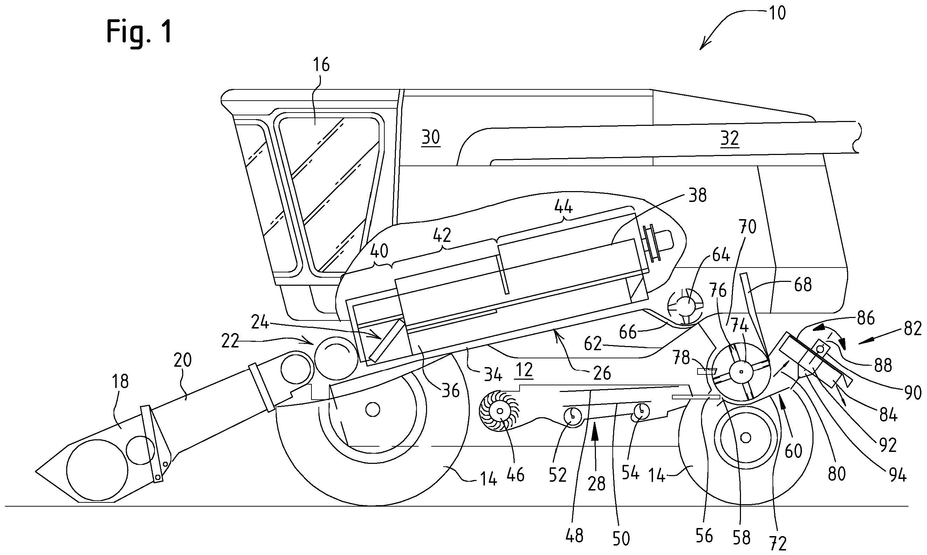

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 kann auch eine tangentiale Dreschtrommel und eine ihr folgende axiale Trenneinrichtung oder Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen unteren Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 befindet sich eine Wand 68, die das Stroh in einen oberen Einlass 70 des Strohhäckslers 60 lenkt.

Der Strohhäcksler 60 setzt sich aus einem Gehäuse 72 und einem darin angeordneten, um eine quer zur Vorwärtsrichtung und horizontal verlaufende Achse drehbaren Rotor 74 mit um den Umfang des Rotors 74 verteilten, paarweise pendelnd aufgehängten Häckselmessern 76 zusammen, welche mit gehäusefesten Gegenmessern 78 zusammenwirken. Stromab eines Auslasses 80 des Strohhäckslers 60 ist sind zwei seitlich nebeneinander angeordnete Wurfgebläse 82 vorgesehen, von denen in der Figur 1 nur ein einziges erkennbar ist.

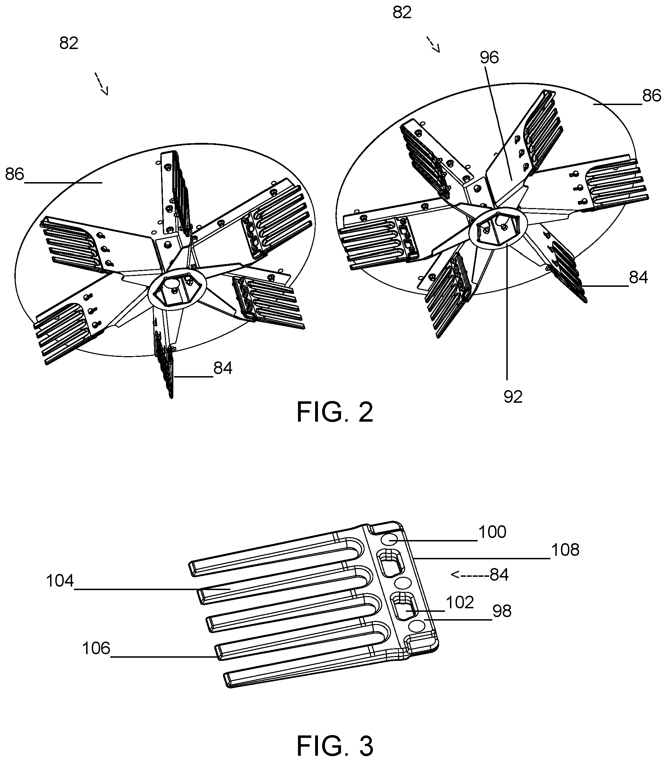

Die Wurfgebläse 82 umfassen eine Anzahl an Wurfpaddeln 84, die jeweils starr mit einer oberen, kreisförmigen Scheibe 86 verbunden sind, die um mittige Drehachsen 88 drehbar sind. Die Scheiben 86 mit den sich radial erstreckenden Wurfpaddeln 84 sind durch jeweils einen Hydraulikmotor 90 in Drehung versetzbar, der oberhalb eines Bodenblechs 102 angebracht ist, welches mit dem Gehäuse 72 des Strohhäckslers 60 verbunden ist. Die Wurfpaddel 84 sind an ihren radial inneren Enden mit sich radial erstreckenden, als Halterung für die Wurfpaddel 84 dienenden Befestigungsplatten 96 verschraubt, welche ihrerseits mit einem mittigen Körper 92 verbunden sind, der an seiner von der Scheibe 86 abgewandten Seite in einen spitzen Konus 94 übergehen kann. Die Wurfpaddel 84 sind einteilig und als Fingerrechen ausgeführt und die Höhe des Körpers 92 (ohne Konus 94, der in der Figur 2 nicht gezeigt ist und auch entfallen kann) ist gleich der Höhe der Wurfpaddel 84.

Der Strohhäcksler 60 definiert eine sich schräg nach hinten und oben erstreckende Auslassebene, in der die Erntegutreste ausgeworfen werden. Die Wurfpaddel 84 der Wurfgebläse 82 rotieren hingegen in einer Wurfgebläseebene, die nach hinten und unten geneigt ist. Die Wurfgebläseebene des Wurfgebläses 82 ist somit gegenüber der Auslassebene des Strohhäckslers 60 nach hinten und unten geneigt. Die Erntegutreste werden durch das Wurfgebläse 82 in der Wurfgebläseebene gefördert und nach hinten und zur Seite ausgeworfen und über die Breite des Schneidwerks 18 über das Feld verteilt. Weitere Einzelheiten, auch zu einer möglichen Umhausung der Wurfgebläse 82, finden sich in der DE 10 2008 040 129 B4, deren Offenbarung durch Verweis mit in die vorliegenden Unterlagen aufgenommen wird.

Es wird nun auf die Figur 3 verwiesen, in welcher ein Wurfpaddel 84 in einer perspektivischen Ansicht gezeigt wird. Das Wurfpaddel 84 umfasst einen proximalen, in der am Wurfgebläse 86 befestigten Position radial inneren Befestigungsbereich 98, der ein inneres, proximales Ende 108 des Wurfpaddels 84 definiert. Der Befestigungsbereich 98 umfasst eine Anzahl kleinerer Löcher 100, die zur Aufnahme von Schrauben dienen, mit denen das Wurfpaddel 84 an der Befestigungsplatte 96 fixiert wird. Zwischen den Löchern 100 liegende, größere Öffnungen 102 mit trapezförmigem Querschnitt dienen zur Gewichtsverminderung.

Das Wurfpaddel 84 umfassen weiterhin eine Anzahl an Fingern 104, in der dargestellten Ausführungsform fünf Finger 104, obwohl auch mehr oder weniger Finger 104 als gezeigt vorhanden sein könnten. Die Finger 104 erstrecken sich parallel zueinander, ausgehend vom Befestigungsbereich 98 zu einem äußeren, distalen Ende 106 und zwischen benachbarten Fingern bleiben Freiräume. Die Finger 104 bilden demnach einen Fingerrechen. Die Finger 104 liegen mit dem Befestigungsbereich 98 in einer gemeinsamen Ebene. Die Abmessung der Finger 104 in der vom Befestigungsbereich 98 und den Fingern 104 eingenommenen Ebene sind, betrachtet man die Querrichtung zur Längserstreckung der Finger 104, etwa konstant, während die Finger sich in der quer zur erwähnten Ebene orientierten Richtung vom proximalen, inneren Ende der Finger 104 zum äußeren, distalen Ende 106 hin verjüngen, d.h. quer zur Ebene nach außen hin immer dünner werden. Man erhält demnach eine Art Träger gleicher Festigkeit, der sich durch Elastizität und lange Haltbarkeit auszeichnet. Die Abmessung der Finger 104 in der in der besagten Ebene liegenden Querrichtung ist größer als jene in der dazu senkrechten Richtung. Der Querschnitt der Finger 104 ist etwa rechteckig mit abgerundeten Ecken.

Das Wurfpaddel 84 ist einteilig in einem Gussverfahren aus duktilem Gusseisen hergestellt. Hierzu wird zunächst ein Modell des Wurfpaddels hergestellt, das etwas größer als das Wurfpaddel 84 nach dem Abkühlen ist. Mittels des Modells wird eine zweiteilige Gussform hergestellt, die mit dem geschmolzenen Metall ausgegossen wird. Die Form wird nach dem Abkühlen getrennt, das Wurfpaddel 84 entnommen und nachbearbeitet (abschleifen, grundieren).

Ein geeignetes Material für das duktile Gusseisen ist der JDM B8-Grad N550B06, d.h. ein gegossenes, duktiles Eisen mit einer Matrix-Mikrostruktur aus Perlit und Ferrit (typische Matrixphasenverteilung mit mehr als 50% Perlit), einer Zugfestigkeit von mehr als 550 MPa, einer Streckgrenze von mehr als 350 MPa und einer Streckgrenze von mehr als 6 % und einer Härte von 173 bis 255 HBW. Der Kohlenstoffanteil liegt insbesondere zwischen 3 und 3,9 %. Das duktile Gusseisen ermöglicht eine Herstellung der Wurfpaddel aus leichtem, preisgünstigem, abnutzungsresistentem und festem Material, das sich besonders für die vorliegende Verwendung als Wurfpaddel für einen Wurfgebläsezusammenbau eines Mähdreschers eignet. Das Material kann insbesondere der Norm EN-GJS-500-7 (GGG50) entsprechen.

## Patentansprüche

1. Wurfgebläsezusammenbau für eine Erntegutrestehäcksel - und -verteilanordnung eines Mähdreschers (10) mit einem um eine Drehachse (88) drehbaren Rotor, um dessen Umfang eine Anzahl an Wurfpaddeln (84) verteilt ist, **dadurch gekennzeichnet, dass** die Wurfpaddel (84) aus duktilem Gusseisen bestehen.

2. Wurfgebläsezusammenbau nach Anspruch 1, wobei die Wurfpaddel (84) als einteiliger Fingerrechen ausgeführt sind, der einen proximalen Befestigungsabschnitt (98) umfasst, der mit einer Halterung des Rotors lösbar verbunden ist, und von dem aus sich eine Anzahl an Fingern (104) bis zu einem distalen Ende (106) des Wurfpaddels erstrecken.

3. Wurfgebläsezusammenbau nach Anspruch 2, wobei die Finger (104) in einer gemeinsamen Ebene liegen und einen Fingerrechen bilden.

4. Wurfgebläsezusammenbau nach Anspruch 3, wobei die Finger (104) mit dem Befestigungsabschnitt (98) in einer gemeinsamen Ebene liegen.

5. Wurfgebläsezusammenbau nach Anspruch 3 oder 4, wobei die Finger (104) einen rechteckigen Querschnitt aufweisen, dessen Erstreckung in der gemeinsamen Ebene größer ist als in der zur gemeinsamen Ebene senkrechten Richtung.

6. Wurfgebläsezusammenbau nach Anspruch 5, wobei die Finger (104) sich vom Befestigungsabschnitt (98) ausgehend zum distalen Ende (106) hin in der zur gemeinsamen Ebene senkrechten Richtung kontinuierlich verjüngen.

7. Wurfgebläsezusammenbau nach Anspruch 6, wobei die Finger (104) eine in der gemeinsamen Ebene gemessene, über die Länge der Finger konstante Breite aufweisen.

8. Mähdrescher (10) mit einem Strohhäcksler (60) und einem oder mehreren stromab davon Wurfgebläsezusammenbau(ten) nach einem der vorhergehenden Ansprüche.

9. Wurfpaddel (84), geeignet zur Anbringung an einem Rotor eines Wurfgebläsezusammenbaus für eine Erntegutrestehäcksel - und -verteilanordnung eines Mähdreschers (10), **dadurch gekennzeichnet, dass** das Wurfpaddel (84) aus duktilem Gusseisen besteht.

10. Wurfpaddel (84) nach Anspruch 9, in Form eines einteiligen Fingerrechens, der einen proximalen Befestigungsabschnitt (98) umfasst, der mit einer Halterung des Rotors lösbar verbindbar oder verbunden ist, und von dem aus sich eine Anzahl an Fingern (104) bis zu einem distalen Ende des Wurfpaddels (84) erstrecken.

11. Wurfpaddel (84) nach Anspruch 10, wobei die Finger (104) in einer gemeinsamen Ebene liegen und einen Fingerrechen bilden.

12. Wurfpaddel (84) nach Anspruch 11, wobei die Finger (104) mit dem Befestigungsabschnitt (98) in einer gemeinsamen Ebene liegen.

13. Wurfpaddel (84) nach Anspruch 11 oder 12, wobei die Finger (104) einen rechteckigen Querschnitt aufweisen, dessen Erstreckung in der gemeinsamen Ebene größer ist als in der zur gemeinsamen Ebene senkrechten Richtung.

14. Wurfpaddel (84) nach Anspruch 13, wobei die Finger (104) sich vom Befestigungsabschnitt (98) ausgehend zum distalen Ende (106) hin in der zur gemeinsamen Ebene senkrechten Richtung kontinuierlich verjüngen.

15. Wurfpaddel (84) nach Anspruch 14, wobei die Finger eine in der gemeinsamen Ebene gemessene, über die Länge der Finger konstante Breite aufweisen.

## Geänderte Patentansprüche

### Geänderte Patentansprüche gemäss Regel 137(2) EPÜ.

1. Wurfgebläsezusammenbau für eine Erntegutrestehäcksel - und -verteilanordnung eines Mähdreschers (10) mit einem um eine Drehachse (88) drehbaren Rotor, um dessen Umfang eine Anzahl an Wurfpaddeln (84) verteilt ist, **dadurch gekennzeichnet, dass** die Wurfpaddel (84) aus duktilem Gusseisen bestehen.

2. Wurfgebläsezusammenbau nach Anspruch 1, wobei die Wurfpaddel (84) als einteiliger Fingerrechen ausgeführt sind, der einen proximalen Befestigungsabschnitt (98) umfasst, der mit einer Halterung des Rotors lösbar verbunden ist, und von dem aus sich eine Anzahl an Fingern (104) bis zu einem distalen Ende (106) des Wurfpaddels erstrecken.

3. Wurfgebläsezusammenbau nach Anspruch 2, wobei die Finger (104) in einer gemeinsamen Ebene liegen und einen Fingerrechen bilden.

4. Wurfgebläsezusammenbau nach Anspruch 3, wobei die Finger (104) mit dem Befestigungsabschnitt (98) in einer gemeinsamen Ebene liegen.

5. Wurfgebläsezusammenbau nach Anspruch 3 oder 4, wobei die Finger (104) einen rechteckigen Querschnitt aufweisen, dessen Erstreckung in der gemeinsamen Ebene größer ist als in der zur gemeinsamen Ebene senkrechten Richtung.

6. Wurfgebläsezusammenbau nach Anspruch 5, wobei die Finger (104) sich vom Befestigungsabschnitt (98) ausgehend zum distalen Ende (106) hin in der zur gemeinsamen Ebene senkrechten Richtung kontinuierlich verjüngen.

7. Wurfgebläsezusammenbau nach Anspruch 6, wobei die Finger (104) eine in der gemeinsamen Ebene gemessene, über die Länge der Finger konstante Breite aufweisen.

8. Mähdrescher (10) mit einem Strohhäcksler (60) und einem oder mehreren stromab davon Wurfgebläsezusammenbau(ten) nach einem der vorhergehenden Ansprüche.
